# EUROPÄISCHE PATENTSCHRIFT

(11) **EP 1 627 473 B1**
(45) Veröffentlichungstag und Bekanntmachung des Hinweises auf die Patenterteilung: **28.02.2007**
(21) Anmeldenummer: 04722273.2
(22) Anmeldetag: 22.03.2004
(51) Int. Cl.: H04B 3/54

(54) **STROMVERSORGUNG ÜBER DIE DATENLEITUNGEN IN LOKALEN NETZEN**
POWER SUPPLY VIA DATA LINES IN LOCAL NETWORKS
ALIMENTATION EN COURANT PAR L'INTERMEDIAIRE DES LIGNES DE DONNEES DANS DES RESEAUX LOCAUX

(30) Priorität: 28.05.2003 DE 10324373
(43) Veröffentlichungstag der Anmeldung: 22.02.2006
(73) Patentinhaber: SIEMENS AKTIENGESELLSCHAFT, 80333 München (DE)
(72) Erfinder: NEUHAUS, Hans-Jürgen, 12161 Berlin (DE)
(86) Internationale Anmeldenummer: PCT/EP2004/003026
(87) Internationale Veröffentlichungsnummer: WO 2004/107602

(56) Entgegenhaltungen:
- EP-A- 1 085 674
- WO-A-02/052745
- US-A- 4 951 312

## Beschreibung

Die Erfindung betrifft ein Verfahren und eine Vorrichtung zur Stromversorgung von einer Strom-Senke (ED) über zwei Datenleitungspaare eines lokalen Netzes (LAN).

In lokalen Netzen (Local Area Networks = LAN), bei denen die physische Datenübertragung beispielsweise über 4-Draht-Datenleitungen (Twisted pairs) erfolgt, wird die Speisung von Endgeräten in der Regel über zusätzliche Drähte geführt. Auf Grund vorgegebener Installationen und/oder zur besseren Ausnutzung von Kabel-Installationen kann es von Vorteil sein, die Speisung von Endgeräten über die (4) Datenleitungen - also ohne zusätzliche Speiseadern - zu führen. Dieses Prinzip befindet sich für LANs mit dem Entwurf "IEEE Draft P 802.3af" in der Standardisierung. Beispielsweise kann ein über ein LAN vernetzter Rechner-Arbeitsplatz durch ein aus dem LAN gespeistes IP-Festnetzendgerät ergänzt werden, ohne die vorhandene 8-adrige Standard-Verkabelung (Twisted pair) zu verändern bzw. zu erweitern.

Bei der Speisung über die Datenleitungen werden in der Regel Phantom-Speiseschaltungen eingesetzt. Hier wird die Speise-Spannung niederohmig in die Mittelanzapfungen der Nutzsignal-Übertrager eingespeist. Hierbei muss die Konstruktion des Übertragers so ausgeführt werden, dass der Speise-Gleichstrom keine Sättigung des Übertrager-Kerns hervorruft. Ist dies gewährleistet führt die niederohmige Speisespannungs-Einkopplung zu keiner Beeinflussung der Nutzsignale, da sich die Nutzsignale an der Mittelanzapfung des Übertragers, dem Einspeisepunkt der Gleichspannung, genau aufheben (Brückenschaltung. Die Nutzsignale werden hier auf der Sekundär-Seite (Rx, Tx) des jeweiligen Übertragers ein- und ausgekoppelt. Für die Phantomschaltungen werden Übertrager verwendet, die einen relativ hohen Raumbedarf, insbesondere hohe Kosten gegenüber anderen elektronischen Standard-Bauelementen aufweisen.

Die EP 1085674 A1 beschreibt ein Netzwerk mit wenigstens zwei Leitungen und mit Netzwerkteilnehmern, das sowohl zur Übertragung von Daten wie auch zur Energieübertragung über das Netzwerk vorgesehen ist. Die beiden Leitungen des Netzwerkes sind sowohl für eine Datenübertragung zwischen den Netzwerkteilnehmern wie auch für eine Energieübertragung von einer Spannungsquelle zu den Netzwerkteilnehmern ausgebildet. Die Daten werden symmetrisch und differentiell über die beiden Leitungen übertragen. Dabei ist ein Pol der Spannungsquelle mit beiden Leitungen gekoppelt und die Netzwerkteilnehmer sind über eine andere, vom Netzwerk getrennte elektrische Verbindung mit dem anderen Pol der Spannungsquelle gekoppelt. Die Netzwerkteilnehmer nehmen eine symmetrische Auskopplung der Energieübertragung über beide Leitungen des Netwerks vor. Beide Leitungen sind gegeneinander isoliert.

Die Aufgabe der vorliegenden Erfindung besteht darin, eine Platz sparende und kosteneffektive Möglichkeit für die Ein- und/oder Auskopplung einer Speise-Spannung in ein lokales Netz vorzuschlagen.

Die Aufgabe wird erfindungsgemäß durch die Gegenstände der unabhängigen Patentansprüche gelöst. Weiterbildungen der Erfindung sind in den Unteransprüchen angegeben. Ein Kern der Erfindung besteht darin, dass eine Einkopplung einer von einer Spannungsquelle zur Verfügung gestellten Speise-Spannung zwischen die Mittelpunkte von zwei Spannungsteilern erfolgt, die jeweils zwischen den beiden Datenleitungen eines Paares angeordnet sind. Ein Vorteil dieser Erfindung ist es, dass dies eine sehr einfache und kosteneffektive Lösung für die Einkopplung einer Speise-Spannung in ein lokales Netz ist.

Die Erfindung wird anhand eines in den Figuren dargestellten Ausführungsbeispiels näher erläutert. Im Einzelnen zeigen
- Figur 1: eine Darstellung einer herkömmlichen Phantomschaltung,
- Figur 2: eine erfindungsgemäße Darstellung einer Schaltungsanordnung zur Ein- und Auskopplung einer Speise-Spannung.

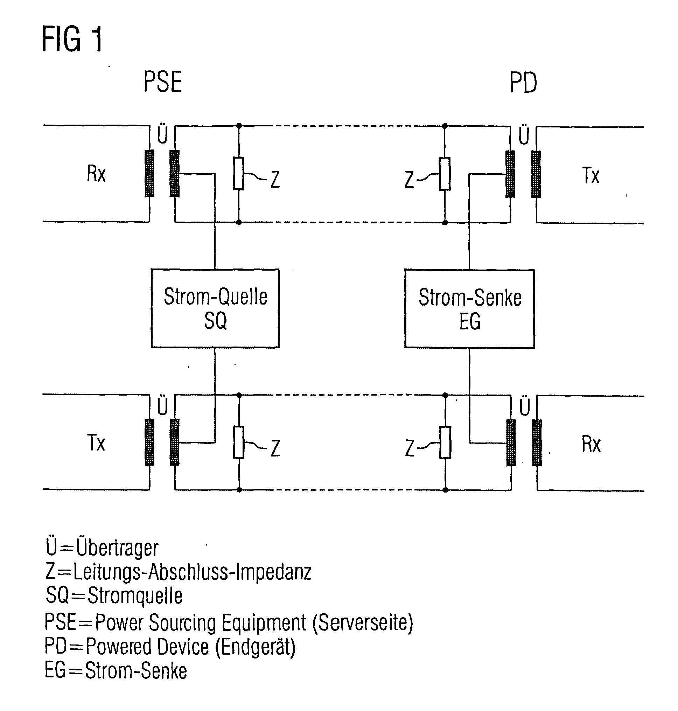

Figur 1 zeigt eine herkömmliche Phantomschaltung. Bei dieser Phantomschaltung werden Übertrager Ü verwendet, über die eine Speise-Spannung von der Spannungsquelle PSE in eine Datenleitung eines Netzes eingespeist wird. Beim Vierdrahtbetrieb stellt Tx eine Senderichtung und Rx eine Empfangsrichtung der Datenleitungen dar. Die Speise-Spannung wird an einem weiteren Übertrager Ü des Endgerätes PD abgegriffen und dem nicht weiter dargestellten Endgerät als Speisung zur Verfügung gestellt.

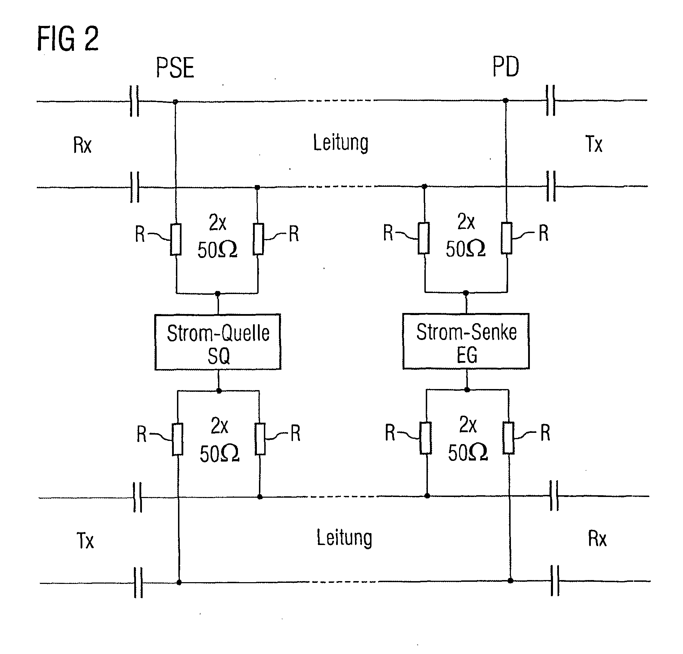

Figur 2 zeigt eine Darstellung einer erfindungsgemäßen Schaltungsanordnung zur Ein- und/oder Auskopplung einer Speise-Spannung. Bei der Speisung über die Datenleitungen wird zum einen die Speise-Spannungs-Einkopplung auf der Serverseite (PSE, Power Sourcing Equipment) und die Speise-Spannungs-Auskopplung auf der Endgeräteseite (PD, Powerded Device) unterschieden. Beide Seiten verhalten sich prinzipiell gleichartig. Daher wird im folgenden nur die Speiseseite (PSE) beschrieben. Auf die Endgeräteseite (PD) wird nur Bezug genommen, wenn dies erforderlich ist. Bei der erfindungsgemäßen Lösung erfolgt die Ein- und Auskopplung der Speise-Spannung über reelle Widerstände R. Die Aufgabe der Widerstände R besteht darin, z. B. auf der Einspeise-Seite (PSE) die Speise-Spannung der niederohmigen Spannungsquelle PSE so in die vier Datenleitungen des lokalen Netzes (LAN) einzuspeisen, dass die Nutzsignale nicht beeinflusst werden. Beim Vierdrahtbetrieb stellt Tx eine Senderichtung und Rx eine Empfangsrichtung der Datenleitungen dar. Die Nutzsignale werden auf jedes Datenleitungspaar über die Koppelkondensatoren eingespeist. Die Schaltungsanordnung zur Ein- bzw. Auskopplung der Speise-Spannung kann prinzipiell aus verschiedenen elektronischen und passiven Bauelementen bestehen. Die Problematik bei Auskopplung der Gleichstrom-Leistung am Endgerät (Spannungs-Senke) ED ist prinzipiell die Gleiche. Ein Endgerät ED kann beispielsweise ein Festnetzendgerät (Telefon), eine Wireless-LAN Basisstation oder Ähnliches sein. Da moderne lokale Netze (LAN) (z. B. Ethernet) mit Twisted Pair-Verkabelung meist eine Sternstruktur aufweisen, sind zum wechselstrommäßigen Signalabschluss der Datenleitungen am Anfang und Ende jeweils 100Ω-Widerstände R vorzusehen. Diese werden erfindungsgemäß zur Speisung in folgender Weise herangezogen: Durch Teilung der 100 Ohm - Widerstände R in jeweils 2 x 50 Ohm Widerstände R ist der Mittelpunkt dieses Spannungsteilers signalfrei. Die Widerstände R im Spannungsteiler werden in Serie geschaltet. Am Mittelpunkt des Spannungsteilers kann daher ohne Signalbeeinflussung die Ein- bzw. Auskopplung der Speisespannung erfolgen.

## Patentansprüche

1. Verfahren zur Stromversorgung einer Strom-Senke (ED) über zwei Datenleitungspaare eines lokalen Netzes (LAN),
dass eine Einkopplung einer von einer Spannungsquelle (SQ) zur Verfügung gestellten Speise-Spannung zwischen die Mittelpunkte von zwei Spannungsteilern erfolgt, die jeweils zwischen den beiden Datenleitungen eines Paares angeordnet sind,
**dadurch gekennzeichnet,**
**dass** als Spannungsteiler zwei gleich große reelle Widerstände (R) betreffend den Leitungsabschluss verwendet werden.

2. Verfahren nach Anspruch 1,
**dadurch gekennzeichnet,**
**dass** die Auskopplung der Speise-Spannung zwischen den Mittelpunkten von zwei Spannungsteilern erfolgt, die jeweils zwischen den beiden Datenleitungen eines Paares angeordnet sind.

3. Verfahren nach einem der vorhergehenden Ansprüche,
**dadurch gekennzeichnet,**
**dass** als Mittelpunkt der Punkt zwischen den zwei reellen Widerständen (R) verwendet wird.

4. Verfahren nach einem der vorhergehenden Ansprüche,
**dadurch gekennzeichnet,**
**dass** als Spannungsteiler eine Schaltungsanordnung mit elektronischen und/oder passiven Bauelemente verwendet wird.

5. Vorrichtung zur Stromversorgung von mindestens einer Strom-Senke (ED) über zwei Datenleitungspaare eines lokalen Netzes,
- mit zwei Spannungsteilern, die jeweils zwischen den beiden Datenleitungen eines Paares angeordnet sind und
- mit Mittelpunkten zwischen den beiden Spannungsteilern zur Einkopplung einer von einer Spannungsquelle (SQ) zur Verfügung gestellten Speise-Spannung **gekennzeichnet durch**
- zwei gleich großen reellen Widerständen (R) betreffend den Leitungsabschluss als Spannungsteiler.

6. Vorrichtung nach Anspruch 5,
**dadurch gekennzeichnet,**
**dass** die beiden Spannungsteiler, die jeweils zwischen den beiden Datenleitungen eines Paares angeordnet sind, und die Mittelpunkte zwischen den beiden Spannungsteilern zur Auskopplung einer von einer Spannungsquelle (SQ) zur Verfügung gestellten Speise-Spannung vorgesehen sind.

## Claims

1. Method for supplying power to a current sink (ED) via two data line pairs of a local area network (LAN), a feed voltage made available by a voltage source (SQ) being injected between the centre points of two voltage dividers which are each arranged between the two data lines of a pair, **characterized in that** two nonreactive resistors (R) which are equal in value in relation to the line termination are used as the voltage dividers.

2. Method according to Claim 1, **characterized in that** the feed voltage is output between the centre points of two voltage dividers which are each arranged between the two data lines of a pair.

3. Method according to one of the preceding claims, **characterized in that** the point between the two nonreactive resistors (R) is used as the centre point.

4. Method according to one of the preceding claims, **characterized in that** a circuit arrangement having electronic and/or passive components is used as the voltage divider.

5. Apparatus for supplying power to at least one current sink (ED) via two data line pairs of a local area network
- having two voltage dividers which are each arranged between the two data lines of a pair, and
- having centre points between the two voltage dividers for the purpose of injecting a feed voltage made available by a voltage source (SQ), **characterized by** two nonreactive resistors (R) which are equal in value in relation to the line termination as the voltage dividers.

6. Apparatus according to Claim 5, **characterized in that** the two voltage dividers, which are each arranged between the two data lines of a pair, and the centre points between the two voltage dividers are provided for the purpose of outputting a feed voltage made available by a voltage source (SQ).

## Revendications

1. Procédé d'alimentation en courant d'un puits (ED) de courant par deux paires de lignes de données d'un réseau (LAN) local, en appliquant une tension d'alimentation mise à disposition par une source (SQ) de tension entre les points médians de deux diviseurs de tension qui sont disposés, respectivement, entre les deux lignes de données d'une paire,
**caractérisé**
**en ce que** l'on utilise concernant la terminaison de ligne comme diviseurs de tension deux résistances (R) réelles de même valeur.

2. Procédé suivant la revendication 1,
**caractérisé**
**en ce que** l'on effectue le découplage de la tension d'alimentation entre les points médians de deux diviseurs de tension qui sont disposés, respectivement, entre les deux lignes de données d'une paire.

3. Procédé suivant l'une des revendications précédentes,
**caractérisé**
**en ce que** l'on utilise comme point médian le point compris entre deux résistances (R) réelles.

4. Procédé suivant l'une des revendications précédentes,
**caractérisé**
**en ce que** l'on utilise comme diviseurs de tension un montage ayant des composants électroniques et/ou passifs.

5. Dispositif d'alimentation en courant d'au moins un puits (ED) de courant par deux paires de lignes de données d'un réseau local,
- comprenant deux diviseurs de tension qui sont disposés, respectivement, entre les deux lignes de données d'une paire, et
- comprenant des points médians entre les deux diviseurs de tension pour appliquer une tension d'alimentation mise à disposition par une source (SQ) de tension,
**caractérisé par**
- deux résistances (R) réelles de même valeur concernant la terminaison de ligne en tant que diviseur de tension.

6. Dispositif suivant la revendication 5,
**caractérisé**
**en ce que** les deux diviseurs de tension qui sont disposés, respectivement, entre les deux lignes de données d'une paire et les points médians entre les deux diviseurs de tension sont prévus pour découpler une tension d'alimentation mise à disposition par une source (SQ) de tension.
